# EUROPEAN PATENT SPECIFICATION

(11) **EP 2 886 298 B1**
(45) Date of publication and mention of the grant of the patent: **31.08.2016**
(21) Application number: 14197504.5
(22) Date of filing: 11.12.2014
(51) Int. Cl.: B29C 51/10, B29C 51/38

(54) **Device for plastic plates thermoforming**
Vorrichtung zum Thermoformen von Kunststoffplatten
Appareil de thermoformage de plaques en platiques

(30) Priority: 20.12.2013 IT BO20130700
(43) Date of publication of application: 24.06.2015
(73) Proprietor: COMI S.P.A., 24040 Ciserano (BG) (IT)
(72) Inventor: Sertori, Simone, Dr., I-24040 Levate (BG) (IT)
(74) Representative: Negrini, Elena

(56) References cited:
- WO-A1-01/43947
- DE-A1-102005 039 691
- US-A1- 2013 119 584

## Description

The present invention refers to the field concerning devices for vacuum thermoforming in the inner mold and for overpressure thermoforming in the outer mold of plates in thermoplastic material and in particular refers to a device for the thermoforming of plastic sheets with adjustment and with a pneumatic seal to compensate differences in thickness of the materials, equipment, tolerances and irregularities.

There are known devices for the thermoplastic sheets forming whose upper part is equipped with a bell in which the pressure can be brought to negative values by suction means. Such bell is supported by an upper frame with removable locks for attachment of an upper framework, lying on a horizontal plane, which abuts with the lower opening of the bell. A pneumatic air tight seal prevents leaking between the mouth of the bell and the top frame. Such known devices also include a lower framework placed horizontally under the upper one of which reproduces the shape in plan; said lower framework is connectable by removable lock means to a proper frame vertically movable by the action of respective actuators. A conveyor, for example of chains kind, transports the plasticized plates between the upper and lower frameworks that mutually approaching can tighten the plate.
A lower frame, placed below the upper one and the frameworks, supports a forming mold of the plate. The upper frame bears closing means, for example consisting of stems vertical column shaped whose free ends bear respective first connecting means for corresponding second connecting means rigidly fixed to the second frame. The second connecting means of the second frame allow to lock or release the first connecting means and then to release the upper and lower frames, for example to allow the tooling phases. Suitable actuators for the vertical translation of the closing means allow to mutually approach and separate the two upper and lower frames, according to the operation cycle of such known devices.
Document WO 01/43947 discloses a device for plastic plates thermoforming having the features of the preamble of Claim 1 of the present invention.

One drawback of such known devices consists in that the closing means and the tight seal are not able to ensure the abutments and the sealing in all the operating conditions and with all the materials; in fact the use of upper and lower frames equipped with equipment out of tolerance because of wear, use of plates with different thicknesses, tolerances and/or positioning inaccuracy of the parts can compromise the sealing and/or the correct abutment.

One object of the present invention is to propose a device able to place the upper and lower frames to two or more predefined and predetermined mutual distances.

Another object is to propose a device that ensures the pneumatic sealing of the bell mouth via a seal able to compensate the variations or irregularities of the distance of the bell mouth, also in a dynamic way and to adapt to the intense forces and stresses to which it is subjected.

The characteristics of the invention are highlighted in the following with particular reference to the accompanying drawings in which:
- Figure 1 shows a front view of the device for plastic plates thermoforming, object of the present invention, in a non-operating condition of the exchange equipment;
- Figure 2 shows a front view of the device of figure 1 in a working condition with a standard thickness;
- Figure 3 shows an enlarged view, partially sectioned by a vertical plane of a portion of the device of Figure 2;
- Figure 4 shows a front view of the device of figure 1 in a working condition with an increased thickness of 4 mm compared to the standard;
- Figure 5 shows an enlarged and partially sectioned view by a vertical plane of a device portion of figure 4;
- Figure 6 shows a front view of the device of figure 1 in a working condition consisting in the ball formation of the plasticized plate to allow the mold insertion from below to upwards;
- Figure 7 shows a partial view and from below of the upper portion of the device of figure 1;
- Figure 8 shows an enlarged and partially sectioned view by a vertical plane of a portion of the device of Figure 6;
- Figure 9 shows a partial and in section view according to the plane IX - IX of figure 7.

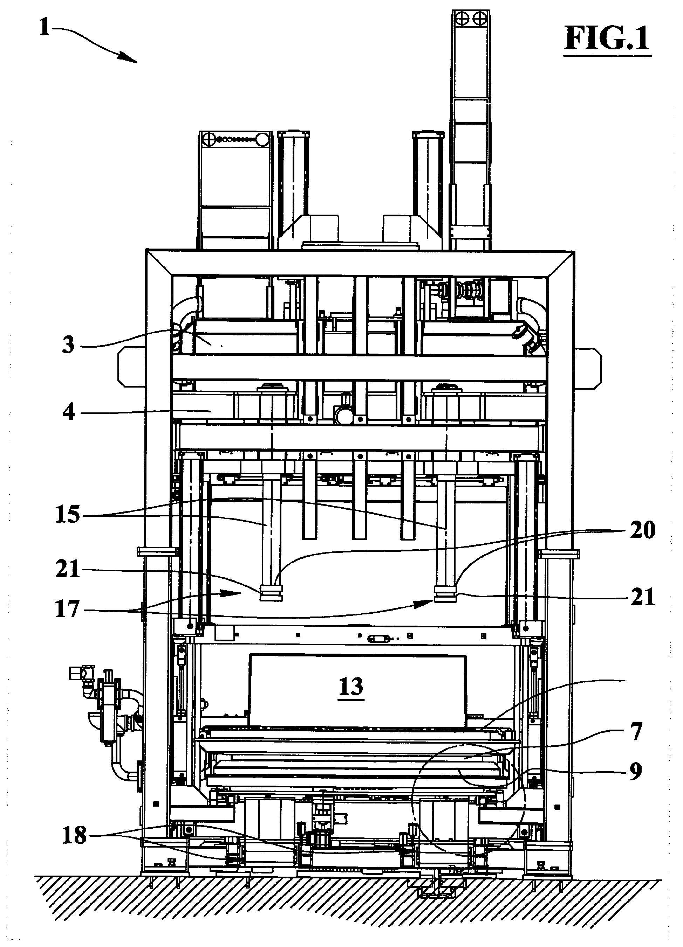

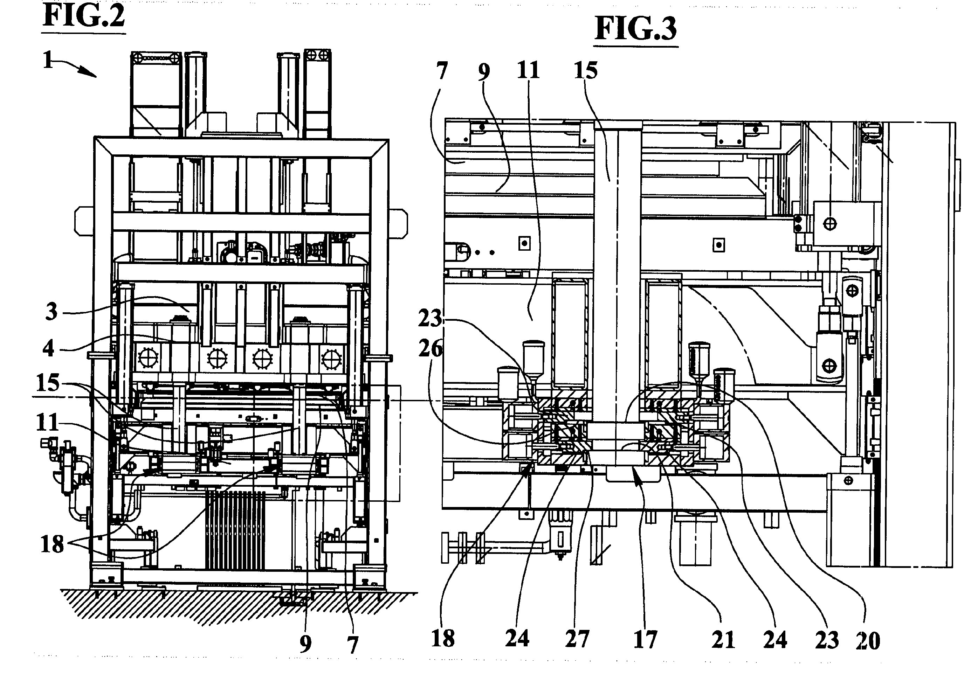

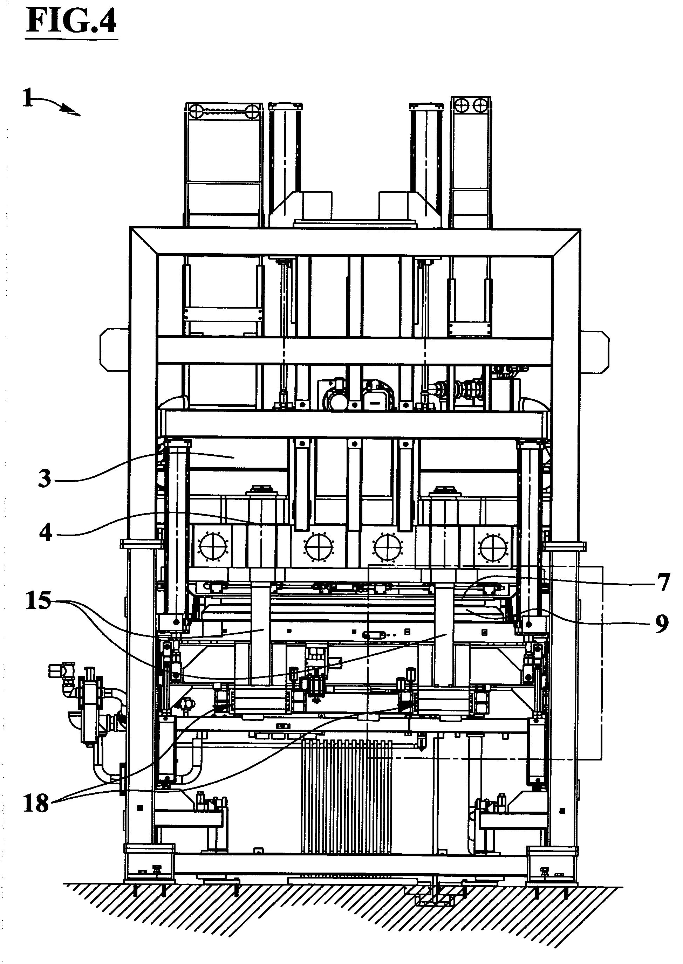

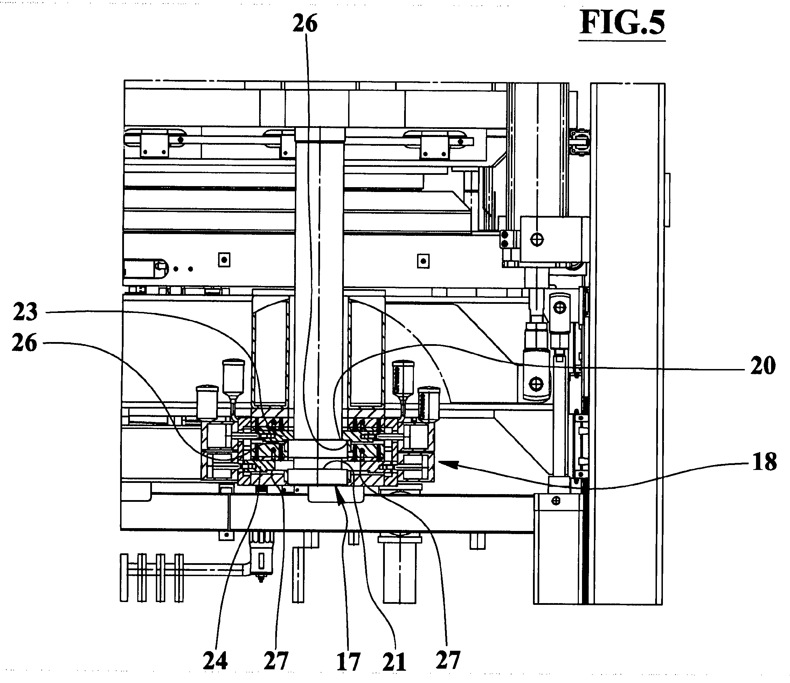

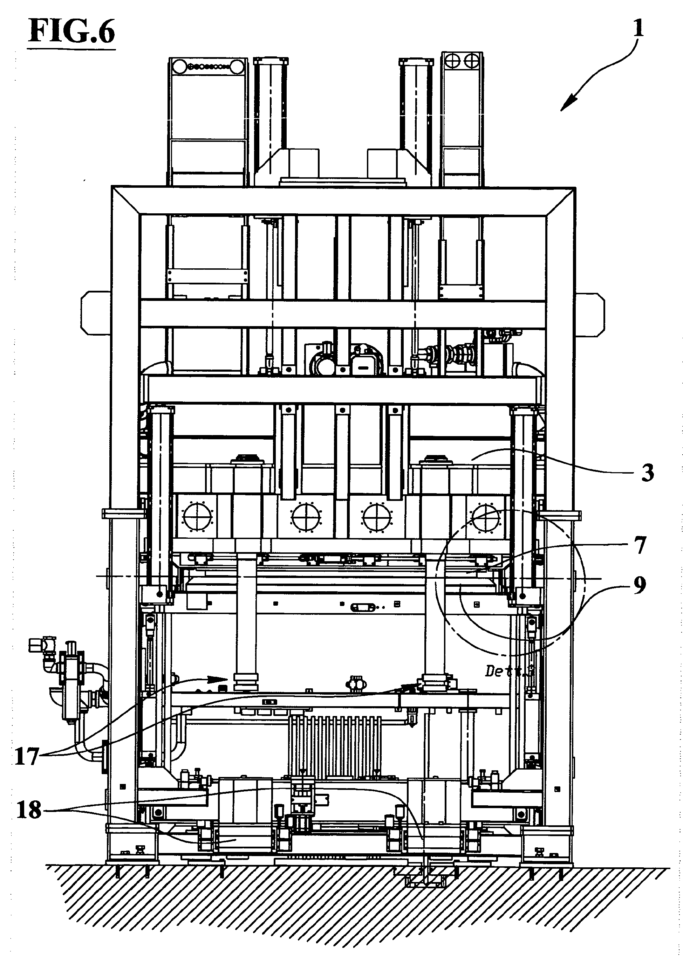

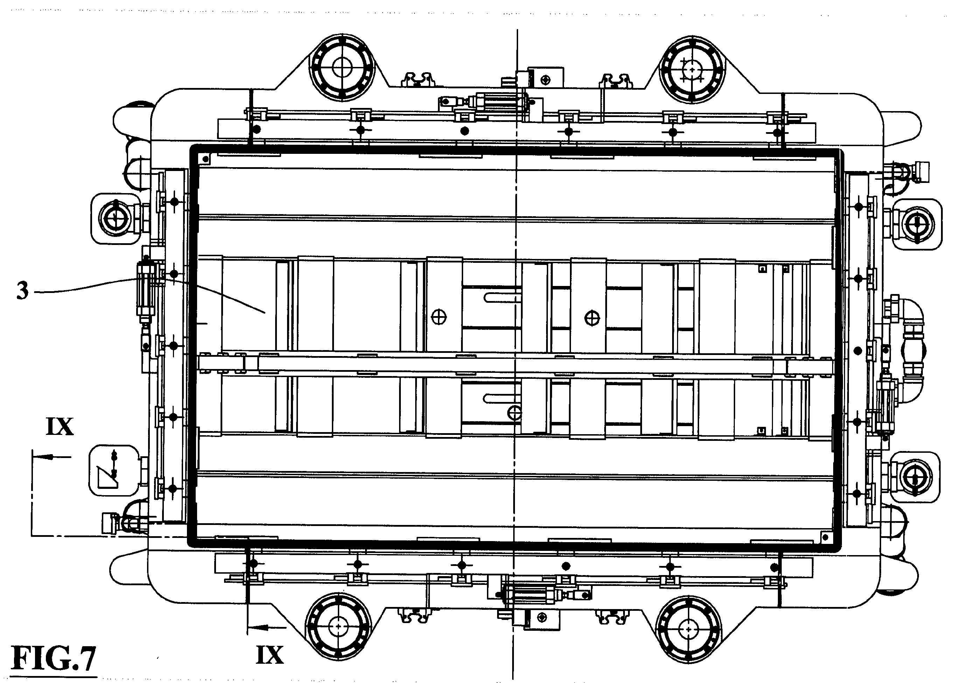

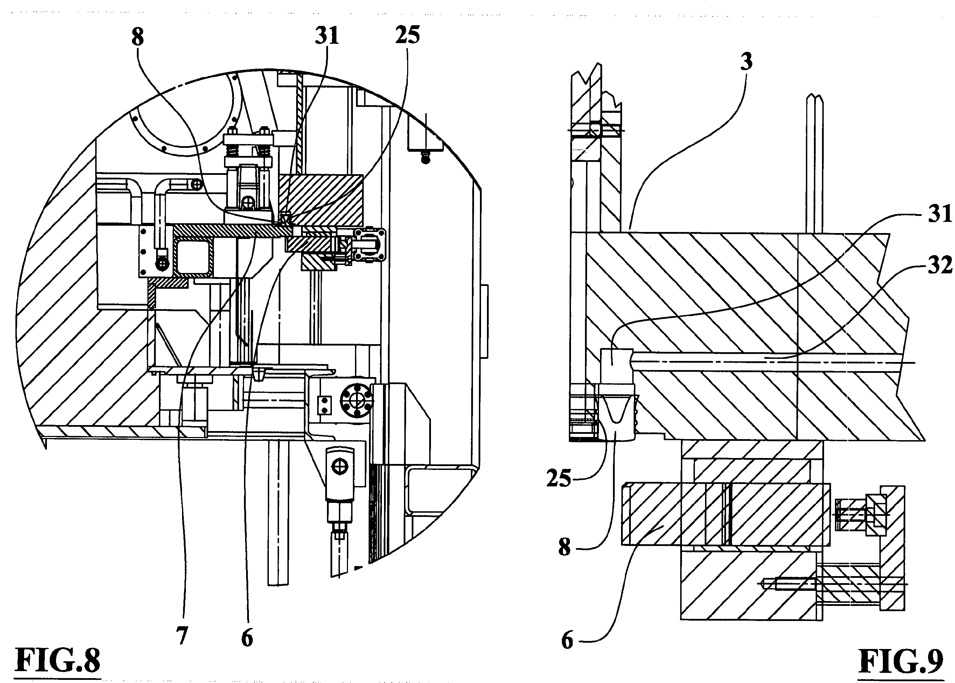

With reference to figures 1 - 9, numeral 1 indicates the device for plastic plates thermoforming in thermoplastic material, for example ABS or HIPS, object of the present invention.

In the following, reference is made to the vertical orientation that assumes the device 1 when it is in its condition of operational installation, in which it is supported by a horizontal floor; the expressions, top, bottom, upper, lower, vertical and horizontal refer to said orientation and condition.

The device comprises a bell means 3, in which the pressure can be brought to negative values by suction means and to positive values by pressurization devices, and a first upper frame means 4, which supports the bell means 3 and vertically movable by effect of respective actuators.

The first frame means 4 is provided with lock means 6 for the removable fixing of a first framework means 7 usually placed in the upper portion of the device, lying on a horizontal plane and usually abutting with the lower opening of the bell means by the interposition of a seal means 8, assigned to prevent the air passages between the first frame means 4 and the first framework means 7.

The device 1 also comprises a second framework means 9 e horizontal and lower with respect to the first 7 of which reproduces the plan shape that is generally rectangular.

A conveyor of known type and not illustrated, for example pliers or chains kind, translates the plasticized plates and placing them between the first 7 and second 9 framework means that approaching each other, by effect of vertical translational actuators, tighten the interposed plate that thus closes the mouth of the bell means inside which, thanks to the suction air with forming of depression, forms the "balloon" made by the plate deformed and sucked into the bell means.

A second frame means 11, placed below to the first upper 4 and to the framework means 7, 9, supports a forming mold 13, and by proper actuators, places it within the cavity formed by the balloon of the plate which is then made sticking to the mold thanks to a baric change both inside and outside of the mold; the subsequent cooling of the plate sticking to the mold, concludes the forming.

The device 1 comprises a plurality of column means 15 of vertical cylinders shaped, each having the upper end fixed to the first frame means 4 and the lower end provided with a respective first connecting means 17 removably lockable to a corresponding second connecting means 18 fixed to the second frame means 11. Said locking occurs during the plate forming.

Each first connecting means 17 is provided with a plurality of shoulder means 20, 21 facing upwards and placed at a predetermined mutual distance. Each second connecting means 18 is provided, for each of shoulder means 20, 21, with at least one, preferably two, corresponding bolt means 23, 24 sliding horizontally towards and away from the respective first connecting means 17.

Each bolt means 23, 24 is provided with a respective matching surface 26, 27 facing downwards and is translated by a corresponding actuator to abut alternately the respective shoulder means 20, 21.

The matching surfaces 26, 27 are placed at a mutual distance equal to the predetermined mutual distance between the shoulder means 20, 21 to which last distance was subtracted or added a predetermined length of distance adjustment (or setting distance) between the first 4 and second 11 frame means. Typically the first 17 and second 18 connecting means will be mutually fixed in a first position corresponding to a normal position of the first frame means 4 locked to the second frame means 11 and alternatively said connecting means 17, 18 can be mutually fixed in a second position corresponding to an increased distance, for example, of 4 mm with respect to the normal distance between the first 4 and second 11 frame means mutually locked. The second and increased distance allows, for example, to use an upper framework means 7 with increased height.

Said shoulder means 20, 21 consist of upper, horizontal and annulus surfaces of respective annular extensions or annular flanges made or secured to the lower ends of the column means 15.

The matching surface 26, 27 are annulus horizontal sectors forming an integral part of the bolt means 23, 24 which are, for example, in the form of a sector of the toroidal element.

Each bolt means 23, 24 is actuated by a respective actuator of pneumatic cylinder 29 type with stem radially oriented with respect to the longitudinal axis of the corresponding column means 15 and fixed to the median portion of its bolt means 23, 24.

As seen, the shoulder means 20, 21 are two and the bolt means 23, 24 are four but it is expected that such quantities can be multiplied by integers so as to obtain proportional increases of the possible reciprocal positions of the first 4 and second 11 frame means when are mutually fixed.

In other words, taking in consideration the device of the figures having two shoulder means 20, 21 and two couples of matching surfaces 26, 27, the first shoulder means 20 is spaced from the second shoulder means 21 at a first distance and the couple of first matching surfaces 26 is spaced from the couple of second matching surfaces 27 at a second distance; the modulus, or absolute value, of the difference between said distances first and second is equal to the adjustment lengths between the first 4 and second 11 frame means.

As seen, the difference between the distance that separates the matching surfaces 26, 27 and the distance that separates the shoulder means 20, 21, corresponding to the thickness adjustment is about 4 mm, but such measure can be easily adapted to the various needs.

The mouth of the bell means 3 inferiorly bears an annular housing 25 consisting of a milled groove and assigned to house the seal means 8 made of solid or closed cell elastomeric material and having almost constant volume.

The bottom of the annular housing 25 has a channel 31, for example consisting of a further and more small groove, for a pressurized fluid fed through at least one supply duct 32 in flow communication with a pressurized fluid source. Such fluid transmits to the seal means a homogeneous pressure to the outside of the annular seat.

The cross sections of the annular housing 25 and the seal means 8 are approximately rectangular and show, respectively, depth and height such as to enable the almost total entry of the seal means in the annular housing and the protrusion of the seal means outward the annular housing.

The seal means 8 is annular shaped and its portion protruding from the seat is flat or rounded and it is assigned to abut with a top flat face of a peripheral flange of the first framework means 7.

The lower face of said peripheral flange of the first framework means 7 is assigned to abut with the lock means 6.

The seal means 8 sides bear respective longitudinal protrusions assigned to statically or slidably abut with the sides of the annular housing 25.

The portion of the seal means 8 facing the bottom of the annular housing 25 bears two longitudinal divergent winglets. Such protrusions and longitudinal winglets improve the sealing of the pressurized fluid between the seal means 8 and the annular housing 25 by the external extroversion of the winglets caused by the pressurized fluid acting on the inner surface of the winglets themselves.

The operation of the device, thanks to the synergy that develops between the system of adjustable mutual locking of the first 4 and second 11 frame means and the particular adaptive configuration of the seal means, guarantees the perfect pneumatic seal of the bell means even in presence of stresses caused by irregularities and tolerances, to the use of plates with different and irregular thicknesses or by inhomogeneity of the forces applied by the actuators, in addition as seen, the invention allows to adopt upper frames with different thicknesses.

Furthermore, the invention advantageously allows to avoid that the seal means 8 is broken because pinched by the frame so consequently losing its sealing function.

An advantage of the present invention is to provide a device able to place the upper and lower frames to two or more predefmed and predetermined mutual distances.

Other advantage is to provide a device having a seal able to compensate variations or irregularities of the distance between the mouth of the bell means, also in dynamic way.

A further advantage consists in the possibility of forming with pressure equal to or greater than two bars inside the bell, without the need of having to press against one another the two upper and lower frames.

Another advantage consists in the possibility to fit in the machine and use also deformed or out of nominal measures upper frames without compromising the operation and productivity of the machine.

A further advantage consists in the fact that any "pinching" of the seal don't compromise the functionality since they don't cause the breaking.

## Claims

1. Device for plastic plates thermoforming comprising, in a respective assembled and operative condition, a bell means as upper first frame means (4) supporting the bell means (3) and equipped with lock means (6) for removably fixing an upper first framework means (7) abutting on the lower opening of the bell means with the interposition of a seal means (8); said device (1) further comprises a second frame means (11), sited below the first frame means (4) and the framework means (7), supporting a forming mould (13) for forming the plates; a plurality of vertical column means (15) each having the top end fixed to the first frame means (4) and the lower end provided with a first connecting means (17) removably lockable to a corresponding second connecting means (18) fixed to the second frame means (11); said device (1) is **characterized in that** each first connecting means (17) is equipped with a plurality of shoulder means (20, 21) upward oriented and sited at a predetermined mutual distance and **in that** each second connecting means (18) is provided with, per each shoulder means (20, 21), at least one corresponding bolt means (23, 24) each provided with a respective matching surface (26, 27) downward facing and each bolt means (23, 24) being shifted by a corresponding actuator for alternatively matching with the respective shoulder means (20, 21), the distance between adjacent shoulder means (20, 21) is different from the distance between adjacent matching surfaces (26, 27).

2. Device according to claim 1 **characterized in that** the shoulder means (20, 21) consist of horizontal annulus shaped surfaces of annular protrusion or annular flange carry out onto or fixed to the lower ends of the column means (15); the matching surfaces (26, 27) consist of horizontal annulus sectors of the bolt means (23, 24), the latter (23, 24) being toroid sector shaped.

3. Device according to claim 1 or 2 **characterized in that** each bolt means (23, 24) is operated by a respective actuator consisting of a pneumatic cylinder (29) whose stem is radially oriented in respect to the longitudinal axis of the corresponding column means (15), said stem being fixed to the median portion of the respective bolt means (23, 24).

4. Device according to any of the preceding claims **characterized in** comprising two shoulder means (20, 21) and at least four bolt means (23, 24).

5. Device according to claim 4 **characterized in that** the setting lengths, that is the distance between the matching surfaces (26, 27) minus the distance between shoulder means (20, 21), is about 4 mm.

6. Device according to any of the preceding claims **characterized in that** the lower portion of the mouth of the bell means (3) has a score shaped annular housing (25) assigned to house the seal means (8) made of solid elastomeric material or of closed cells foam material.

7. Device according to claim 6 **characterized in that** the bottom of the annular housing (25) has a channel (31) for a pressurized fluid fed by a feeding pipe (32) in flow communication with a source of the pressurized fluid.

8. Device according to claim 6 or 7 **characterized in that** the transverse sections of the annular housing (25) and of the seal means (8) are almost rectangular shaped and has respective deepness and height to allow the almost complete entering of the seal means into the annular housing and the at least partial protrusion of the seal means outward annular housing.

9. Device according to any of claims 6 - 8 **characterized in that** the portion of the seal means (8) protruding outward the housing (25) is assigned to match with the upper flat face of a perimetric flange of the first framework means (7) and said seal means (8) portion is flat or rounded; the lower face of the perimetric flange of the first framework means (7) is assigned to match with the lock means (6).

10. Device according to any of claims 6 - 9 **characterized in that** the side faces of the seal means (8) have respective longitudinal protrusion assigned to match, in static or dynamic manner, with the sided of the annular housing (25), the portion of the seal means (8) facing the bottom of the annular housing (25) has two diverging longitudinal winglets.

11. Device according to any of the preceding claims **characterized in that**, when the device (1) is provided with two shoulder means (20, 21) and two bolt means (23, 24), the first shoulder means (20) is spaced from the second shoulder means (21) of a first distance and the first matching surface (26) is spaced from the second matching surface (27) of a second distance; the modulus of the difference between said distances first and second is equal to the adjustment lengths between the first (4) and second (11) frame means.

## Patentansprüche

1. Vorrichtung zum Thermoformen von Kunststoffplatten, die in einem entsprechenden zusammengebauten und betriebsbereiten Zustand umfasst:
ein Trichtermittel (3), ein oberes erstes Rahmenmittel (4), das das Trichtermittel (3) unterstützt und mit Rastmitteln (6) zum lösbaren Befestigen eines oberen ersten Rahmenwerkmittels (7) ausgestattet ist, das an der unteren Öffnung des Trichtermittels mit der Anordnung von Dichtmitteln (8) dazwischen anliegt, wobei
die Vorrichtung (1) weiterhin ein zweites Rahmenmittel (11) umfasst, das unterhalb des ersten Rahmenmittels (4) und des Rahmenwerkmittels (7) angeordnet ist und eine Gussform (13) zum Formen der Platten unterstützt, und
eine Mehrzahl von vertikalen Spaltenmitteln (15), von denen jedes das obere Ende befestigt am ersten Rahmenmittel (4) aufweist und das untere Ende ist mit einem ersten Verbindungsmittel (17) bereitgestellt, das lösbar mit einem entsprechenden zweiten Verbindungsmittel (18) verrastbar ist, das am zweiten Rahmenmittel (11) befestigt ist,
die Vorrichtung (1) ist **dadurch gekennzeichnet, dass** jedes erste Verbindungsmittel (17) mit einer Mehrzahl von Schultermitteln (20, 21) ausgestattet ist, die aufwärts orientiert und in einem vorbestimmten gegenseitigen Abstand angeordnet sind, sowie dadurch, dass jedes zweite Verbindungsmittel (18) für jedes Schultermittel (20, 21) bereitgestellt ist mit mindestens einem entsprechenden Bolzenmittel (23, 24), das jeweils bereitgestellt ist mit einer entsprechenden dazu passenden Oberfläche (26, 27), die nach unten weist, und jedes Bolzenmittel (23, 24) wird versetzt durch ein entsprechendes Stellglied zum alternativen Zusammenpassen mit dem entsprechenden Schultermittel (20, 21), wobei der Abstand zwischen benachbarten Schultermitteln (20, 21) verschieden ist vom Abstand zwischen benachbarten zusammenpassenden Oberflächen (26, 27).

2. Vorrichtung gemäß Patentanspruch 1, **dadurch gekennzeichnet, dass** die Schultermittel (20, 21) aus horizontalen ringförmigen Oberflächen von ringförmigen Vorsprüngen oder ringförmigen Flanschen bestehen, die ausgeführt sind auf oder befestigt sind am unteren Ende des Spaltenmittels (15), wobei
die zusammenpassenden Oberflächen (26, 27) aus horizontalen ringförmigen Abschnitten des Bolzenmittels (23, 24) bestehen, wobei die letzteren (23, 24) die Form eines Kreisringabschnitts aufweisen.

3. Vorrichtung gemäß Patentanspruch 1 oder 2, **dadurch gekennzeichnet, dass** jedes Bolzenmittel (23, 24) durch ein entsprechendes Stellglied betrieben wird, das aus einem pneumatischen Zylinder (29) besteht, dessen Stange radial in Bezug auf die Längsachse des entsprechenden Spaltenmittels (15) ausgerichtet ist, wobei die Stange am mittleren Bereich des entsprechenden Bolzenmittels (23, 24) befestigt ist.

4. Vorrichtung gemäß einem der vorhergehenden Patentansprüche, **dadurch gekennzeichnet, dass** sie zwei Schultermittel (20, 21) und mindestens vier Bolzenmittel (23, 24) umfasst.

5. Vorrichtung gemäß Patentanspruch 4, **dadurch gekennzeichnet, dass** die Setzlängen, das heißt der Abstand zwischen den zusammenpassenden Oberflächen (26, 27) abzüglich des Abstands zwischen den Schultermitteln (20, 21), ungefähr 4 mm betragen.

6. Vorrichtung gemäß einem der vorhergehenden Patentansprüche, **dadurch gekennzeichnet, dass** der untere Bereich der Öffnung des Trichtermittels (3) ein rillenförmiges, ringförmiges Gehäuse (25) aufweist, das zugeordnet ist, um das Dichtmittel (8) aufzunehmen, das aus festem elastomeren Material oder aus geschlossenzelligem Schaummaterial hergestellt ist.

7. Vorrichtung gemäß Patentanspruch 6, **dadurch gekennzeichnet, dass** der Boden des ringförmigen Gehäuses (25) einen Kanal (31) für ein unter Druck gesetztes Fluid aufweist, das durch eine Zuführleitung (32) in Strömungsverbindung mit einer Quelle des unter Druck gesetzten Fluides zugeführt wird.

8. Vorrichtung gemäß Patentanspruch 6 oder 7, **dadurch gekennzeichnet, dass** die Querschnitte des ringförmigen Gehäuses (25) und des Dichtmittels (8) nahezu rechteckig geformt sind und eine entsprechende Tiefe und Höhe aufweisen, um das nahezu vollständige Eindringen des Dichtmittels in das ringförmige Gehäuse sowie das mindestens teilweise Vorstehen des Dichtmittels aus dem äußeren ringförmigen Gehäuse zu gestatten.

9. Vorrichtung gemäß einem der Patentansprüche 6 bis 8, **dadurch gekennzeichnet, dass** der Bereich des Dichtmittels (8), der aus dem Gehäuse (25) vorsteht, zugeordnet ist, um mit der oberen flachen Fläche eines Umhreisflanschs des ersten Rahmenwerkmittels (7) zusammenzupassen und der Bereich des Dichtmittels (8) ist flach oder abgerundet, wobei
die untere Fläche des Umhreisflanschs des ersten Rahmenwerkmittels (7) zugeordnet ist, um mit dem Rastmittel (6) zusammenzupassen.

10. Vorrichtung gemäß einem der Patentansprüche 6 bis 9, **dadurch gekennzeichnet, dass** die Seitenflächen des Dichtmittels (8) entsprechende Längsvorsprünge aufweisen, die zugeordnet sind, um, in einer statischen oder dynamischen Weise, mit den Seiten des ringförmigen Gehäuses (25) zusammenzupassen, wobei der Bereich des Dichtmittels (8), der dem Boden des ringförmigen Gehäuses (25) zugewandt ist, zwei divergierende längliche Winglets aufweist.

11. Vorrichtung gemäß einem der vorhergehenden Patentansprüche, **dadurch gekennzeichnet, dass**, wenn die Vorrichtung (1) bereitgestellt ist mit zwei Schultermitteln (20, 21) und zwei Bolzenmitteln (23, 24), das erste Schultermittel (20) beabstandet ist vom zweiten Schultermittel (21) mit einem ersten Abstand und die erste zusammenpassende Oberfläche (26) ist beabstandet von der zweiten zusammenpassenden Oberfläche (27) mit einem zweiten Abstand, wobei
der Betrag der Differenz zwischen dem ersten und zweiten Abstand ist gleich den Einstelllängen zwischen dem ersten (4) und zweiten Rahmenmittel (11).

## Revendications

1. Dispositif de thermoformage de plaques en plastique comprenant, dans un état assemblé et fonctionnel respectif, un moyen à tuliper (3), un premier moyen de châssis supérieur (4) supportant le moyen à tuliper (3) et comprenant des moyens de verrouillage (6) pour fixer de façon amovible un premier moyen d'armature supérieur (7) en butée contre l'ouverture inférieure du moyen à tuliper avec l'interposition d'un moyen d'étanchéité (8) ; ledit dispositif (1) comprend en outre un second moyen de châssis (11), placé au-dessous du premier moyen de châssis (4) et du moyen d'armature (7), supportant un moule de formage (13) pour le formage des plaques ; une pluralité de moyens de colonne verticale (15) ayant chacun l'extrémité supérieure fixée au premier moyen de châssis (4) et l'extrémité inférieure munie d'un premier moyen de liaison (17) apte à être verrouillé de façon amovible à un second moyen de liaison correspondant (18) fixé au second moyen de châssis (11) ; ledit dispositif (1) est **caractérisé par le fait que** chaque premier moyen de liaison (17) est équipé d'une pluralité de moyens d'épaulement (20, 21) orientés vers le haut et placés à une distance mutuelle prédéterminée et **par le fait que** chaque second moyen de liaison (18) est muni, pour chaque moyen d'épaulement (20, 21), d'au moins un moyen de boulon correspondant (23, 24) muni chacun d'une surface d'accouplement respective (26, 27) tournée vers le bas, et chaque moyen de boulon (23, 24) étant décalé par un actionneur correspondant pour s'accoupler de façon alternative avec les moyens d'épaulement respectifs (20, 21), la distance entre des moyens d'épaulement adjacents (20, 21) est différente de la distance entre des surfaces d'accouplement adjacentes (26, 27).

2. Dispositif selon la revendication 1, **caractérisé par le fait que** les moyens d'épaulement (20, 21) consistent en surfaces horizontales, en forme d'anneau, de saillie annulaire ou de bride annulaire réalisée sur ou fixée aux extrémités inférieures des moyens de colonne (15) ; les surfaces d'accouplement (26, 27) consistent en secteurs d'anneau horizontaux des moyens de boulon (23, 24), ces derniers (23, 24) ayant une forme de secteur toroïdal.

3. Dispositif selon la revendication 1 ou 2, **caractérisé par le fait que** chaque moyen de boulon (23, 24) est actionné par un actionneur respectif consistant en un vérin pneumatique (29) dont la tige est orientée radialement par rapport à l'axe longitudinal des moyens de colonne correspondants (15), ladite tige étant fixée à la partie centrale des moyens de boulon respectifs (23, 24).

4. Dispositif selon l'une quelconque des revendications précédentes, **caractérisé par le fait qu'**il comprend deux moyens d'épaulement (20, 21) et au moins quatre moyens de boulon (23, 24).

5. Dispositif selon la revendication 4, **caractérisé par le fait que** les longueurs de réglage, à savoir la distance entre les surfaces d'accouplement (26, 27) moins la distance entre les moyens d'épaulement (20, 21), est d'environ 4 mm.

6. Dispositif selon l'une quelconque des revendications précédentes, **caractérisé par le fait que** la partie inférieure de la bouche du moyen à tuliper (3) a un logement annulaire en forme d'encoche (25) agencé pour recevoir le moyen d'étanchéité (8) fait de matière élastomère pleine ou de matière en mousse à cellules fermées.

7. Dispositif selon la revendication 6, **caractérisé par le fait que** le fond du logement annulaire (25) a un canal (31) pour un fluide mis sous pression acheminé par un tuyau d'alimentation (32) en communication fluidique avec une source du fluide mis sous pression.

8. Dispositif selon la revendication 6 ou 7, **caractérisé par le fait que** les sections transversales du logement annulaire (25) et du moyen d'étanchéité (8) ont une forme presque rectangulaire et ont une profondeur et une hauteur respectives pour permettre l'entrée presque complète du moyen d'étanchéité dans le logement annulaire et la saillie au moins partielle du moyen d'étanchéité vers l'extérieur du logement annulaire.

9. Dispositif selon l'une quelconque des revendications 6 à 8, **caractérisé par le fait que** la partie du moyen d'étanchéité (8) faisant saillie vers l'extérieur du logement (25) est agencée pour s'accoupler avec la face plate supérieure d'une bride périphérique du premier moyen d'armature (7) et ladite partie du moyen d'étanchéité (8) est plate ou arrondie ; la face inférieure de la bride périphérique du premier moyen d'armature (7) est agencée pour s'accoupler avec le moyen de verrouillage (6).

10. Dispositif selon l'une quelconque des revendications 6 à 9, **caractérisé par le fait que** les faces latérales du moyen d'étanchéité (8) ont une saillie longitudinale respective agencée pour s'accoupler, de manière statique ou dynamique, avec le côté du logement annulaire (25), la partie du moyen d'étanchéité (8) étant tournée vers le fond du logement annulaire (25) a deux ailettes longitudinales divergentes.

11. Dispositif selon l'une quelconque des revendications précédentes, **caractérisé par le fait que**, lorsque le dispositif (1) est muni de deux moyens d'épaulement (20, 21) et de deux moyens de boulon (23, 24), le premier moyen d'épaulement (20) est espacé du second moyen d'épaulement (21) d'une première distance et la première surface d'accouplement (26) est espacée de la seconde surface d'accouplement (27) d'une second distance ; le module de la différence entre lesdites première et seconde distances est égal aux longueurs d'ajustement entre les premier (4) et second (11) moyens de châssis.
